(19) Europäisches Patentamt
European Patent Office
Office européen des brevets

(11) **EP 4 752 842 A1**

(12) **EUROPEAN PATENT APPLICATION**
published in accordance with Art. 153(4) EPC

(43) Date of publication:
**03.06.2026 Bulletin 2026/23**

(21) Application number: **24845119.7**

(22) Date of filing: **12.04.2024**

(51) International Patent Classification (IPC):
***G06T 19/00*** *(2011.01)*

(52) Cooperative Patent Classification (CPC):
**G06T 1/00; G06T 19/00**

(86) International application number:
**PCT/JP2024/014894**

(87) International publication number:
**WO 2025/022734 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 JP 2023122036**

(71) Applicant: **CELSYS, Inc.
Tokyo 160-0023 (JP)**

(72) Inventors:
• **KATSUMI Satoshi
Tokyo 160-0023 (JP)**
• **YAMAGUCHI Kentaro
Tokyo 160-0023 (JP)**

(74) Representative: **Hautier IP - MC/EP
17, avenue Albert II
C/o The Office & Co - L'ALBU
98000 Monaco (MC)**

(54) **METHOD AND PROGRAM FOR GENERATING IMAGE OF THREE-DIMENSIONAL OBJECT**

(57)    [Object] When a user draws an illustration on a virtual canvas through perspective projection by using drawing software, a computer easily draws a three-dimensional object, which will serve as a model for user's drawing, on a picture plane in a composition more closely matching a user's intention, in conjunction with a movement of a vanishing point.

[Solving Means] Provided is a method for generating an image of a three-dimensional object existing in a virtual three-dimensional space by projecting the three-dimensional object onto a picture plane by perspective projection using a virtual camera placed in the three-dimensional space. The method includes: updating a position and/or orientation of the virtual camera in response to a change in a position of at least one of multiple vanishing points existing on the picture plane and corresponding to infinity of coordinate axes in a known Cartesian coordinate system existing in the three-dimensional space; and generating the image of the three-dimensional object based on the virtual camera, the position and/or orientation of which is updated. The updating includes changing the position and/or orientation of the virtual camera by applying a process having a characteristic in which, in a case where the changed position of the vanishing point is returned to the position of the vanishing point before the change in the position of the at least one of the plurality of vanishing points, the updated position and/or orientation of the virtual camera is returned to the position and/or orientation of the virtual camera before the change in the position of the at least one of the plurality of vanishing points.

FIG.9

**Description**

[Technical Field]

The present invention relates to a method and program for generating an image of a three-dimensional object.

[Background Art]

Heretofore, a perspective ruler based on the laws of perspective or simply perspective is used in some cases for drawing images of three-dimensional objects such as illustrations using drawing software.

In drawing an illustration, the perspective ruler is used to produce an accurate perspective drawing based on the laws of perspective. In a case where a user draws an image of an object, the user places the perspective ruler in alignment with the object desired to be drawn. For example, in a case where the object has a box shape, the perspective ruler is placed along the box shape. The user can draw lines in a perspective view along the perspective ruler. When drawing a line, the user can use the perspective ruler to draw the line along a guide line of the perspective ruler, so that the user, even drawing by hand, can draw a correct line that follows the laws of perspective. By repeating the same procedure, the user can create an illustration according to the laws of perspective on a two-dimensional canvas.

For an ordinary illustration composition, it is general to use a linear projection method called perspective projection.

For example, PLT 1 discloses a technique for disclosing a perspective ruler placed on a planar canvas that exists in a virtual three-dimensional space. According to a user's instruction to draw a fisheye representation, this perspective ruler is displayed by a computer so that lines can be drawn on the canvas along the perspective ruler.

In addition, NPL 1 discloses a technique for placing a 3D object of a human body on a 3D layer in which a perspective ruler is defined. When a vanishing point or eye level is moved, the angle of the 3D layer changes accordingly and the appearance of the 3D object also changes accordingly. However, in a case where the vanishing point is moved multiple times, the size and the like of the drawn 3D object gradually change, resulting in an illustration composition not intended by a user, which means that a function that lacks convenience is provided.

[Citation List]

[Patent Literature]

PTL 1: Japanese Patent No. 7305241

[Non Patent Literature]

NPL 1: "Interaction of Perspective Ruler with 3D Layer-Use of Perspective Ruler, Part 2" https://tips.clip-studio. com/ja-jp/articles/1116#1dff0c63 (accessed on July 24, 2023)

[Summary of Invention]

[Technical Problem]

The technique disclosed herein has an object to enable a computer, when a user draws an illustration on a virtual canvas through perspective projection by using drawing software, to easily draw a three-dimensional object, which will serve as a model for user's drawing, on a picture plane in a composition more closely matching a user's intention in conjunction with a movement of a vanishing point.

[Solution to Problem]

The technique disclosed herein provides a method for generating an image of a three-dimensional object existing in a virtual three-dimensional space by projecting the three-dimensional object onto a picture plane by perspective projection using a virtual camera arranged in the three-dimensional space, the method including: updating a position and/or orientation of the virtual camera in response to a change in a position of at least one of a plurality of vanishing points existing on the picture plane and corresponding to infinity of coordinate axes in a known Cartesian coordinate system existing in the three-dimensional space; and generating the image of the three-dimensional object based on the virtual camera, the position and/or orientation of which is updated. The updating includes changing the position and/or orientation of the virtual camera by applying a process having a characteristic in which, in a case where the changed position of the vanishing point is returned to the position of the vanishing point before the change in the position of the at least one of the plurality of vanishing points, the updated position and/or orientation of the virtual camera is returned to the position and/or orientation of the virtual camera before the change in the position of the at least one of the plurality of vanishing points.

[Advantageous Effects of Invention]

According to the technique disclosed therein, when a user draws an illustration on a virtual canvas through perspective projection by using drawing software, a computer is enabled to easily draw a three-dimensional object, which will serve as a model for user's drawing, on a picture plane in a composition more closely matching a user's intention in conjunction with a movement of a vanishing point.

[Brief Description of Drawings]

[Fig. 1A] Fig. 1A is a diagram in which a camera, a picture plane, a reference coordinate system, and a sample point are seen from a direction parallel to the picture plane.
[Fig. 1B] Fig. 1B is a diagram regarding the order of a point Po, a point Ps, and a vanishing point Vs in arrangement, which illustrates a case where the point Ps and the point Vs are located on opposite sides of the point Po.
[Fig. 1C] Fig. 1C is a diagram illustrating an example in which the picture plane is placed at a position different from the position in Fig. 1A.
[Fig. 2A] Fig. 2A is a diagram illustrating a point Po, points Ps, and vanishing points Vs on the picture plane.
[Fig. 2B] Fig. 2B is a diagram illustrating an example in which a foot of a perpendicular to a half-line Vs_newPo dropped from a point Ps_old is set as Ps_new.
[Fig. 2C] Fig. 2C is a diagram illustrating an example in which a point Ps gradually approaches a point Po with repetition of an operation of moving a vanishing point.
[Fig. 2D] Fig. 2D is a diagram illustrating an example in which a position Ps_new is determined such that PoPs_old = PoPs_new holds.
[Fig. 2E] Fig. 2E is a diagram illustrating an example in which Vs_new is too close to Po in the example in Fig. 2D.
[Fig. 3] Fig. 3 is a diagram illustrating an example in which a new position O_new of the origin O of a reference coordinate system in a camera coordinate system is determined by using a point Po and a point Ps_new.
[Fig. 4A] Fig. 4A is a diagram illustrating an example in which a foot of a perpendicular dropped from a point H_old to a line segment V1_newV2_new on a picture plane is set as a point H_new.
[Fig. 4B] Fig. 4B is a diagram illustrating an example in which a point H approaches V1 in a case where the position of V2 successively changes while the position of V1 remains unchanged.
[Fig. 4C] Fig. 4C is a diagram illustrating an example in which a perpendicular cannot be dropped from the point H_old to the line segment V1_newV2_new.
[Fig. 4D] Fig. 4D is a diagram illustrating another example in which a perpendicular cannot be dropped from a point H_old to a line segment V1_newV2_new.
[Fig. 4E] Fig. 4E is a diagram illustrating an example in which a distance between a vanishing point and a point H is maintained.
[Fig. 4F] Fig. 4F is a diagram illustrating an example in which a length V1_newV2_new is too short to take a point H_new on a line segment V1_newV2_new.
[Fig. 5] Fig. 5 is a diagram illustrating an example in which a new reference coordinate system 301 is defined and used instead of the origin O of a reference coordinate system 300.
[Fig. 6A] Fig. 6A is a diagram illustrating a positional relationship among vanishing points V1, V2, and V3 on a picture plane 100, a camera Pc, and three coordinate axes of a reference coordinate system 300.
[Fig. 6B] Fig. 6B is a diagram illustrating characteristics of vanishing points and a camera in two-point perspective.
[Fig. 6C] Fig. 6C is a diagram illustrating a situation in which the position of a point to which the origin of the reference coordinate system is projected onto a picture plane 100 is kept unchanged before and after a vanishing point position change.
[Fig. 7A] Fig. 7A is a diagram illustrating an example in which PcO/PcPo is kept unchanged before and after a vanishing point position change.
[Fig. 7B] Fig. 7B is a diagram illustrating an example in which PcO is kept unchanged before and after a vanishing point position change.
[Fig. 7C] Fig. 7C is a diagram illustrating an example in which a component of PcO in a camera optical axis direction is kept unchanged before and after a vanishing point position change.
[Fig. 8A] Fig. 8A is a diagram illustrating an example in which the position of a point Po on the picture plane 100 also changes with a change in the position of a vanishing point.

[Fig. 8B] Fig. 8B is a diagram illustrating an example in which a foot of a perpendicular to a half-line Vs_newPo_new dropped from a point Ps_old is set as Ps_new.

[Fig. 8C] Fig. 8C is a diagram illustrating an example in which the position of Ps_new is determined such that Po_oldPs_old = Po_newPs_new holds.

[Fig. 8D] Fig. 8D is a diagram illustrating an example in which PcO/PcPo is kept unchanged before and after a vanishing point position change.

[Fig. 8E] Fig. 8E is a diagram illustrating an example in which PcO is kept unchanged before and after a vanishing point position change.

[Fig. 8F] Fig. 8F is a diagram illustrating an example in which a component of PcO in a camera optical axis direction is kept unchanged before and after a vanishing point position change.

[Fig. 9] Fig. 9 is a diagram for explaining a perspective drawing method.

[Fig. 10] Figs. 10A and 10B are diagrams illustrating a change in an image of an object image 155 in a case where the positions of vanishing points V1 and V3 on a picture plane 100 are changed.

[Fig. 11] Fig. 11 is a hardware configuration diagram in an embodiment.

[Description of Embodiments]

When a user draws on a virtual canvas on a plane using an input interface (for example, such as a touch pen, a mouse, a touch panel, a tablet, or a pointing device), a perspective ruler is provided together with various functions. It should be noted that, among conventional functions related to the perspective ruler, commonly known functions may be omitted from explanation in the present description.

The following description will be given on the assumption that the technique disclosed herein is mainly applied to a perspective ruler. However, it should be noted that the disclosed technique is not limited to application to perspective rulers, but can also be used to create a scene in a three-dimensional space, such as producing a video using 3D CG, and to quickly generate a video in which changes in the position and/or orientation of an object in a real space are estimated.

In the present description, a virtual three-dimensional space is also mentioned. However, it should be noted that this virtual three-dimensional space is used to clearly explain the present technique (such as a method for generating a perspective ruler), and that the existence of this virtual three-dimensional space is not necessarily essential when a user draws using this technique (such as a perspective ruler).

The prerequisites for description of embodiments will be explained below.

(1) Vanishing Points

In a case where lines in a three-dimensional space are drawn on a picture plane by perspective projection using a camera which is set in that three-dimensional space, the lines at infinity converge at a single point on the picture plane. This convergence point is referred to as a vanishing point of these lines. The position of the vanishing point on the picture plane can be found as an intersection of the picture plane with a line that passes through the camera position and is parallel to these lines. However, in a case where these lines are parallel to the picture plane, the vanishing point is located at infinity and does not appear on the picture plane.

A group of lines in parallel to each other has the same vanishing point.

(2) Reference Coordinate System

The invention of the present application focuses on a single known Cartesian coordinate system existing in a three-dimensional space and deals with a behavior in response to a manipulation of the position of the vanishing point of any of coordinate axes of the system. This known Cartesian coordinate system is referred to as a "reference coordinate system".

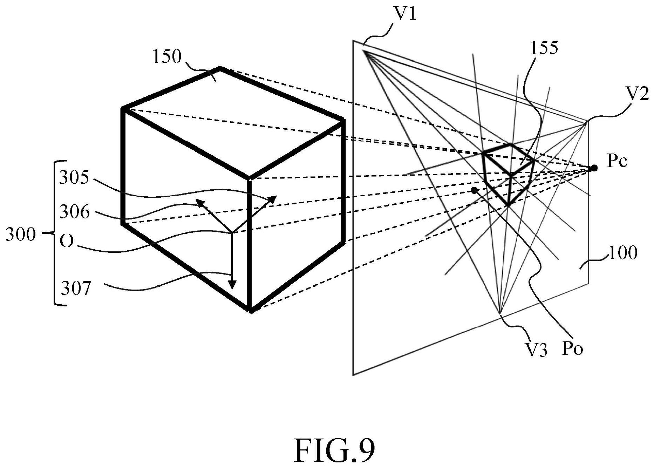

Fig. 9 is a diagram for explaining a perspective drawing method (a drawing method based on perspective projection). By viewing an object 150 from a camera Pc, which corresponds to an eye in the perspective drawing method, a computer can project the object 150 onto a picture plane 100 and draw an image 155 of the object 150.

The position and the orientation of the object 150 are specified in a known reference coordinate system 300 to be described later. The reference coordinate system 300 has three coordinate axes 305, 306, and 307 orthogonal to each other and an origin O.

On the picture plane 100, there are vanishing points V1, V2, and V3 in three-point perspective. Needless to say, drawing on the picture plane 100 may be done using two-point perspective or one-point perspective.

The camera Pc is located on a line passing through the orthocenter of a triangle V1V2V3 formed by the three vanishing points and being perpendicular to the picture plane, and satisfies $\angle$V1PcV2 = $\angle$V2PcV3 = $\angle$V3PcV1 = $\pi/2$. In

addition, PcV1 is parallel to the coordinate axis 306 of the reference coordinate system 300, PcV2 is parallel to the coordinate axis 305 of the reference coordinate system 300, and PcV3 is parallel to the coordinate axis 307 of the reference coordinate system 300. Accordingly, once the vanishing points V1, V2, and V3 are determined, relative orientations of the camera and the reference coordinate system are determined.

Since the position and the orientation of the object 150 are determined in the reference coordinate system 300, if the position of at least one vanishing point is changed, the relative orientations of the camera and the reference coordinate system change accordingly, and the image 155 also changes.

Details on a method for determining relative positions of the camera and the reference coordinate system and so forth will be described later.

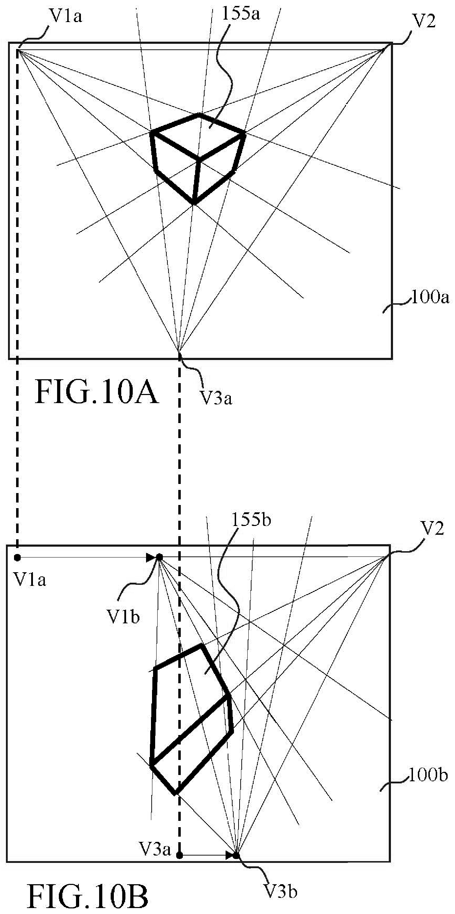

Fig. 10 includes diagrams illustrating a change in an image of the object image 155 in a case where the positions of the vanishing points V1 and V3 on the picture plane 100 are changed.

Although this case illustrates an example in which the positions of two vanishing points are changed, it goes without saying that the same concept can be applied to cases where the position of at least one vanishing point is changed, and where the positions of all three vanishing points are changed.

Fig. 10A illustrates the positions of the vanishing points and an image 155a of the object 150 before the positions of the vanishing points V1 and V3 are changed.

Fig. 10B illustrates the positions of the vanishing points and an image 155b of the object 150 after the positions of the vanishing points V1 and V3 are changed. The vanishing point V1 is changed in position from V1a to V1b. Moreover, the vanishing point V3 is changed in position from V3a to V3b. The image 155b of the object 150 after the positions of the vanishing points V1 and V3 are changed is illustrated.

In this way, the image of the object on the picture plane 100 changes in response to an operator's change in the position of at least one of the three vanishing points. The operator can obtain an image of an object with a desired appearance by changing the position of at least one vanishing point. Using the obtained image of the object as a model, the operator can easily draw a three-dimensional illustration or the like according to the perspective drawing method.

(3) Notation

A line segment connecting points A and B is denoted as "a line segment AB". The length of the line segment AB is denoted as "AB" or "length AB".

Note that a line with no thickness and a surface with no thickness are also included in three-dimensional objects.

(4) Position of Camera PC in Three-point Perspective

If none of the three coordinate axes of the reference coordinate system 300 are parallel to the picture plane 100, three vanishing points appear on the picture plane 100. This situation is called three-point perspective.

(5) Vanishing Points in Three-point Perspective

The following characteristics are known about the vanishing points in three-point perspective.

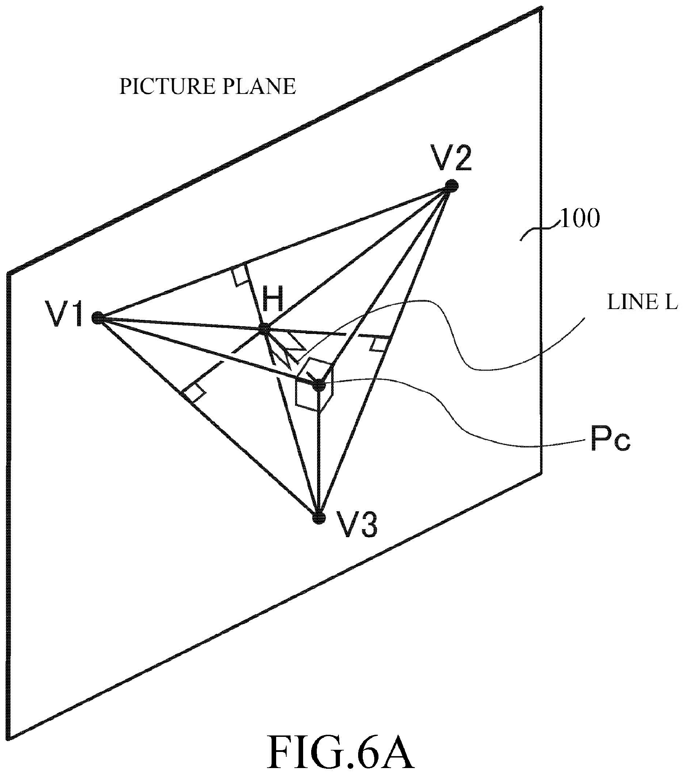

As illustrated in Fig. 6A, the three vanishing points on the picture plane 100 according to the three coordinate axes of the reference coordinate system 300 are denoted as V1, V2, and V3, respectively. The camera position is denoted as Pc. A line that passes through the orthocenter H of a triangle V1V2V3 and is perpendicular to the picture plane 100 is denoted as L. Pc exists on the line L. Moreover, $\angle V1PcV2 = \angle V2PcV3 = \angle V3PcV1 = \pi/2$ holds. In addition, the triangle V1V2V3 is always an acute triangle and the orthocenter H is located inside the triangle V1V2V3.

Using these characteristics, a relative positional relationship between the picture plane 100 and the camera Pc can be obtained. The relative orientations of the picture plane 100 and the camera Pc are usually set in advance and will not be changed.

Each of a line PcV1, a line PcV2, and a line PcV3 is parallel to one of the coordinate axes of the reference coordinate system 300. For this reason, the relative orientations of the camera Pc and the reference coordinate system 300 can be obtained. However, with these conditions alone, the relative positions of the camera Pc and the reference coordinate system 300 cannot be determined.

(6) Position of Camera PC in Two-point Perspective

If one of the three coordinate axes of the reference coordinate system 300 is parallel to the picture plane 100 and two of them are not parallel to the picture plane 100, two vanishing points appear on the picture plane 100 (the remaining one vanishing point is located at infinity). This situation is called two-point perspective.

(7) Vanishing Points in Two-point Perspective

The following characteristics are known about the vanishing points in two-point perspective.

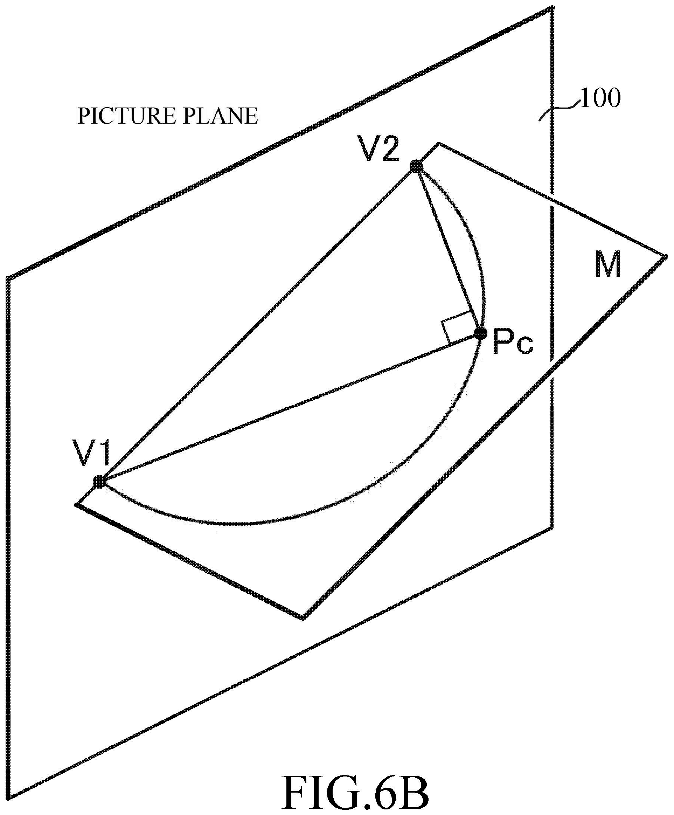

As illustrated in Fig. 6B, two vanishing points on the picture plane 100 according to two of the coordinate axes of the reference coordinate system 300 are denoted as V1 and V2, respectively. The camera position is denoted as Pc. A plane that contains a line segment V1V2 and is perpendicular to the picture plane 100 is denoted as M. Pc exists on the plane M. Moreover, $\angle$V1PcV2 = $\pi$/2 holds. In other words, Pc exists on the circumference of a semicircle that exists on the plane M and has the line segment V1V2 as its diameter (according to the inscribed angle theorem).

In this way, the relative positional relationship between the picture plane 100 and the camera Pc cannot be determined from the positions of the vanishing points alone. Therefore, some additional condition must be added to determine the positional relationship.

Once the relative positional relationship between the picture plane 100 and the camera Pc is obtained, the relative orientations of the camera Pc and the reference coordinate system 300 can be obtained because the lines PcV1 and PcV2 are each parallel to one of the coordinate axes of the reference coordinate system 300. However, as in the three-point perspective, the relative positions of the camera Pc and the reference coordinate system 300 cannot be determined.

(8) Schemes in Embodiments

Each of embodiments deals with a method for changing the position and the orientation of the camera PC as a user performs an operation of changing a vanishing point position.

<Embodiment 1 (Three-point Perspective)>

Here, it is assumed that three vanishing points exist on the picture plane 100 and the positions and the orientations of the camera Pc and the reference coordinate system 300 are already obtained. From this state, at least one of the vanishing points is moved by a user's operation or the like.

As described above, the relative orientations of the camera Pc and the reference coordinate system 300 can be found from the positions of the vanishing points after the change, but the relative positions cannot be determined. Therefore, the following condition is set to determine the relative positions of the camera Pc and the reference coordinate system 300.

<Scheme A1: Method using Origin of Reference coordinate system and Sample Point>

A sample point is a point whose positional coordinates in the reference coordinate system 300 are known. A condition is set as follows.

(Condition 1) The position of a point to which the origin of the reference coordinate system is projected onto the picture plane 100 is kept unchanged before and after a vanishing point position change.

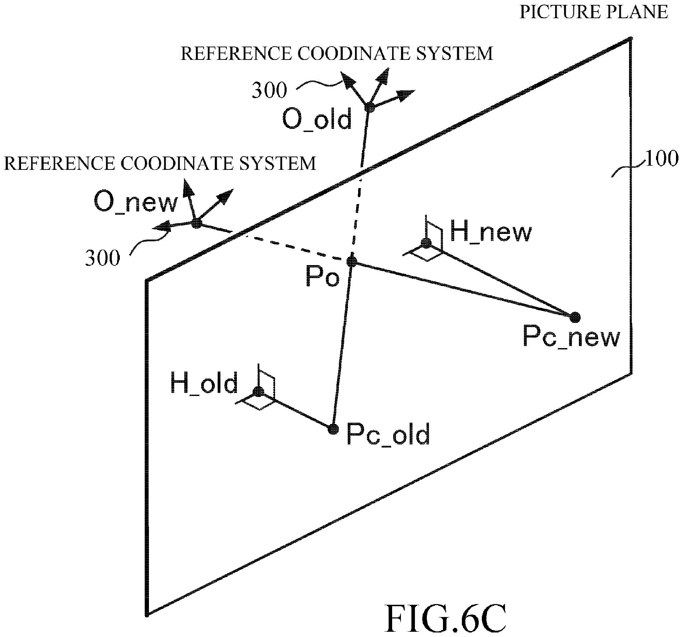

The setting of this condition 1 is illustrated in Fig. 6C. Pc_old is a camera position before the vanishing point position change. Pc_new is a camera position obtained from the vanishing points after the vanishing point position change. H_old and H_new are the feet of the perpendiculars to the picture plane 100 dropped from the camera Pc before and after vanishing point position change. A point Po is obtained by projecting the origin O_old of the reference coordinate system before the vanishing point position change onto the picture plane 100 using the camera Pc. The origin O_new of the reference coordinate system after the vanishing point position change exists on a line connecting the camera Pc_new and the point Po, but where on that line the origin O_new exists is unknown. Furthermore, the direction of each coordinate axis of the reference coordinate system 300 after the vanishing point position change is obtained as the direction of the line connecting Pc_new and the corresponding vanishing point.

The above settings are not enough as conditions, so the position of the sample point projected onto the picture plane 100 is also used. A specific usage method will be described later.

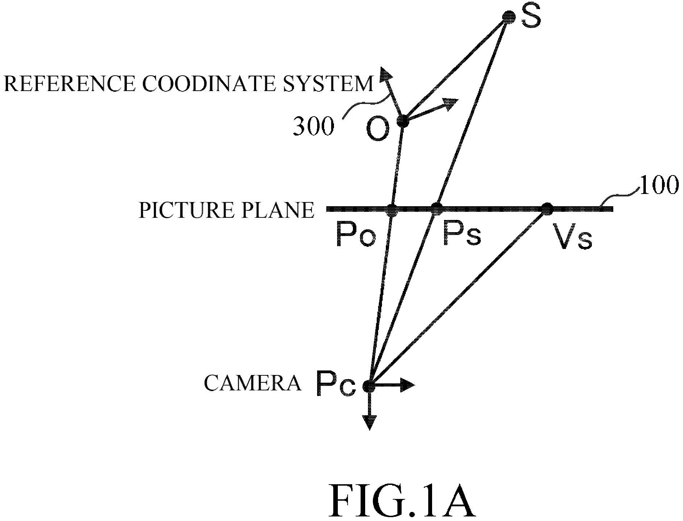

Fig. 1A is a diagram in which the camera Pc, the picture plane 100, the reference coordinate system 300, and a sample point S are seen from a direction parallel to the picture plane 100. The camera position is denoted as Pc. The origin O of the reference coordinate system 300 and the sample point S are projected to a point Po and a point Ps, respectively, on the picture plane 100 by using the camera Pc located at the point Pc. A vanishing point of a line connecting the point O and the point S on the picture plane 100 is denoted as Vs. In other words, a line PcVs is parallel to a line OS. All of the point Pc, the point O, the point Po, the point S, the point Ps, and the point Vs exist on the same plane. Therefore, the point Po, the point Ps, and the point Vs exist on the same line.

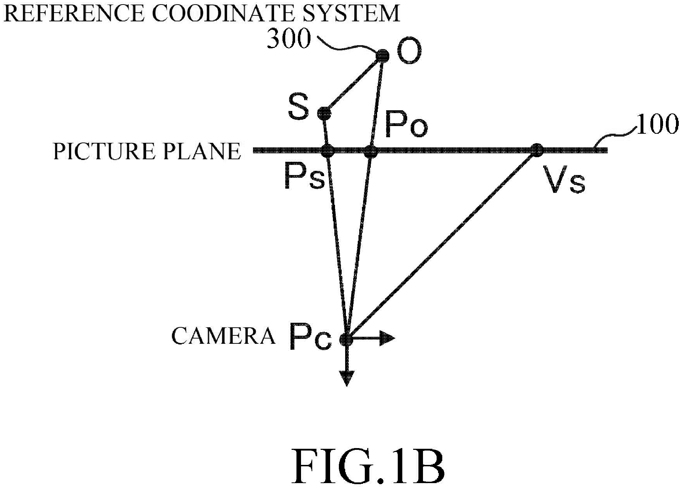

Note that the order of the point Po, the point Ps, and the vanishing point Vs in arrangement may be such that the points Ps and Vs are located on opposite sides of the point Po as illustrated in Fig. 1B. However, the point Po and the point Ps are always located on the same side of the vanishing point Vs.

The distance from the camera Pc to the picture plane 100 may be any distance. Specifically, the distance is set as follows. A content drawn on the picture plane 100 is presented to a user as an image, and the user performs, on the image, an operation such as a vanishing point position change. On the other hand, the camera Pc and the object exist in the virtual three-dimensional space. The unit of length on the image and the unit of length in the three-dimensional space are independent of each other and can be set as desired. For example, the length on an image may be expressed in pixels, and the length in the three-dimensional space may be expressed in meters. The number of meters corresponding to one pixel may be set as desired, and changing this setting will change the distance from the camera Pc to the picture plane 100.

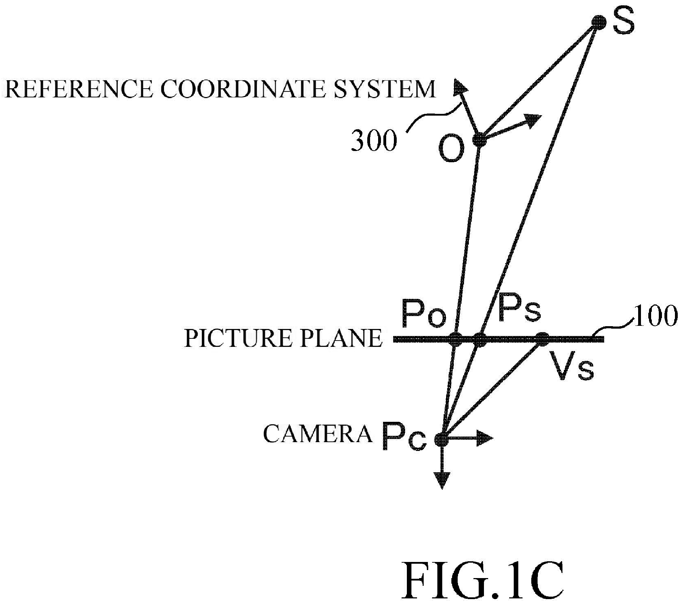

Therefore, for example, it is possible to arrange the picture plane 100 as illustrated in Fig. 1C instead of Fig. 1A. However, it is desirable to keep the distance consistent before and after a vanishing point position change. For example, if the conversion ratio between pixels and meters given above is set to 1 pixel = k meters, it is desirable to keep the value k the same before and after a vanishing point position change. Fig. 6C illustrates the positions and the orientations of the camera Pc and the reference coordinate system 300 before and after a vanishing point position change on the basis of the picture plane 100. For example, in a case where the position of one of the three vanishing points is changed, the positions of the remaining two vanishing points are not changed on the picture plane 100 in Fig. 6C. If the value k is kept the same before and after a vanishing point position change, one meter of the reference coordinate system 300 before the vanishing point position change and one meter of the reference coordinate system 300 after the vanishing point position change have the same length, which facilitates description. For this reason, in the following description, the value k is kept the same before and after a vanishing point position change. The value k is any value in a range of k > 0. In addition, in all the schemes of the invention of the present application to be described below, the same results (the relative positions and orientations of Pc_new and the reference coordinate system 300) are obtained irrespective of the value k.

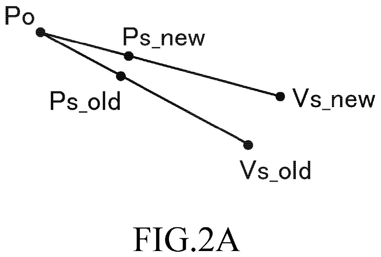

Fig. 2A illustrates the point Po, the points Ps, and the vanishing points Vs on the picture plane 100. The positions of the point Ps and the point Vs before a vanishing point position change are Ps_old and Vs_old, respectively. The positions of the point Ps and the point Vs after the vanishing point position change are Ps_new and Vs_new, respectively. The position of the point Po remains unchanged before and after the vanishing point position change according to the above condition setting.

The point Po, the point Ps_old, and the vanishing point Vs_old are known. The position of the vanishing point Vs_new is obtained as follows. The relative orientations of the camera Pc and the reference coordinate system 300 after the vanishing point position change are calculated from the three vanishing points V1, V2, and V3 on the picture plane 100 after the vanishing point position change. Since the position of the sample point S in the reference coordinate system 300 is known, the direction of a line OS in a camera coordinate system is obtained by using this known position. As in Fig. 1A, an intersection of the picture plane 100 with a line that passes through the point PC and is parallel to the line OS is determined as Vs_new. In this way, even if the relative positions of the camera Pc and the reference coordinate system 300 are unknown, their relative orientations can be identified, so that the vanishing point Vs_new can be obtained.

The point Ps_new exists on a half-line Vs_newPo (the Po side extends infinitely). The position of the point Ps_new is determined in accordance with any of the following schemes.

<Scheme B1>

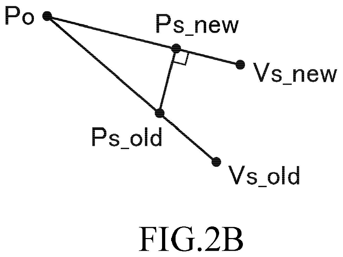

As illustrated in Fig. 2B, a foot of a perpendicular to the half-line Vs_newPo dropped from the point Ps_old is determined as Ps_new. In other words, the position of Ps_new is determined such that $\angle$Ps_oldPs_newPo = $\pi$/2 holds. In this scheme, the point Ps_new is the point closest to the point Ps_old among points on a line PoVs_new. Therefore, the change in the position of the point Ps on the picture plane 100 can be minimized.

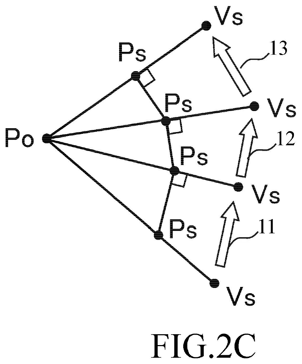

However, since PoPs_new ≤ PoPs_old, there is a problem that the point Ps approaches the point Po with each repetition of a process 11, a process 12, and a process 13 as illustrated in Fig. 2C.

<Scheme B2>

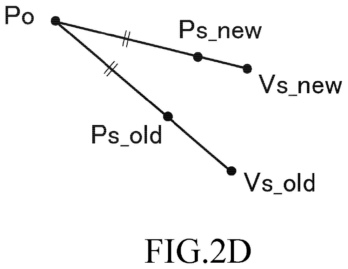

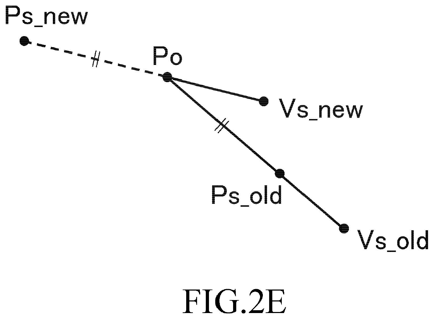

As illustrated in Fig. 2D, the position of Ps_new is determined such that PoPs_old = PoPs_new holds. In this scheme, the length PoPs remains unchanged even if the process is repeated and the problem of the scheme B1 in Fig. 2C does not occur. However, if Vs_new is too close to Po as in Fig. 2E, the point Ps_new has to be taken on a half-line extended on the Po side from a line Vs_newPo, resulting in the positional relationship illustrated in Fig. 1B. Although such an arrangement is geometrically correct, a change in the arrangement from that in Fig. 1A to that in Fig. 1B results in an abrupt change in the orientation of the reference coordinate system 300 relative to the camera Pc. This means that the orientation of the camera Pc relative to the reference coordinate system 300 changes abruptly, which deteriorates operability for the user.

Note that this scheme involves, in a case where the user performs an operation of changing a vanishing point position on an image and then returns the vanishing point position to the previous position, transformation by returning the position and/or orientation of the camera Pc to the state before the user performs the operation of changing the vanishing point position on the image.

To describe this in general terms, this scheme may be said to be a scheme that involves transformation in which a change between the states of the camera Pc before and after a vanishing point movement is reversible. The scheme involving such reversible transformation is a scheme that will not cause any inconvenience in practical use as long as the reversible transformation is used and can be said to be a fully usable scheme. It goes without saying that the scheme involving such reversible transformation is a technique falling within the technical scope specified in claims.

<Scheme B3>

The position of Ps_new is determined such that PoPs_old/PoVs_old = PoPs_new/PoVs_new holds.

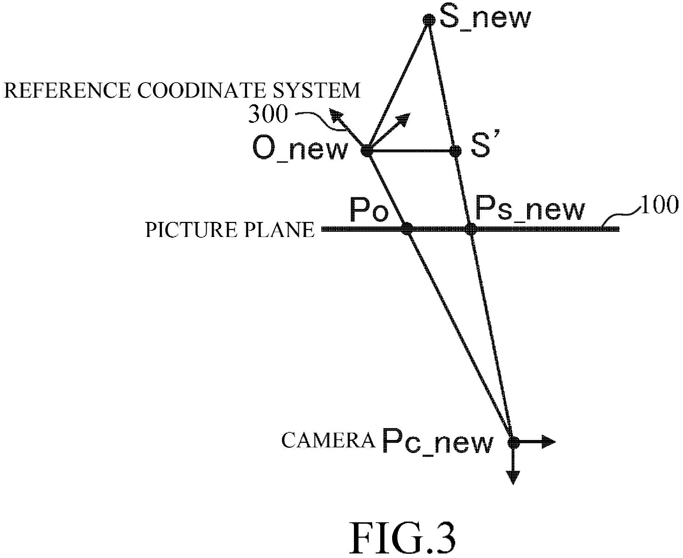

The position of Ps_new is determined by using any of the above schemes B1, B2, and B3. Next, the new position O_new of the reference coordinate system origin O in the camera coordinate system is obtained by using the point Po and the point Ps_new (Fig. 3). Since it is already known that O_new exists on a line Pc_newPo, where on that line O_new exists is obtained in the following manner.

The origin of the reference coordinate system 300 and the sample point after the vanishing point position change are denoted as O_new and S_new, respectively. First, a length O_newS' in Fig. 3 is obtained. The point S' is a point on a line Pc_newPs_new, and a line segment O_newS' is parallel to a line segment PoPs_new. As described above, the orientation of the reference coordinate system 300 relative to the camera coordinate system is obtained based on the positions of the three vanishing points. Since the position coordinates of the sample point in the reference coordinate system 300 are known, the direction of a line O_newS_new in the camera coordinate system is obtained. In addition, since the direction of a line segment S'S_new is the same as the direction of a line PcPs_new, the direction of the line segment S'S_new in the camera coordinate system is known. Moreover, since the line segment O_newS' is parallel to the line segment PoPs_new, the direction of the line segment O_newS' in the camera coordinate system is known. Accordingly, focusing on a triangle O_newS'S_new, the directions of its three sides are known and the angles of the three vertices are also known. Moreover, since the position coordinates of the sample point in the reference coordinate system 300 are known, the length of the side O_newS_new is also known. In general, if the angles of the three vertices and the length of one side in a triangle are known, the lengths of the remaining two sides can be obtained. Therefore, the length of the side O_newS' can be obtained.

Next, a length Pc_newO_new is obtained. Since a triangle Pc_newPoPs_new and a triangle PcO_newS' are similar in shape, Pc_newPo:PoPs_new = Pc_newO_new:O_newS' holds. Accordingly, Pc_newO_new is obtained in accordance with Pc_newO_new = O_newS' * (Pc_newPo/PoPs_new).

Thus, the position of the reference coordinate system 300 in the camera coordinate system is obtained. The position and the orientation of the camera coordinate system relative to the reference coordinate system 300 are obtained. Since the position and the orientation of the reference coordinate system 300 are known, the position and the orientation of the camera Pc are identified.

<Schemes Using Only Origin of Reference Coordinate System (Schemes A2, A3, A4, and A5)>

Although the above scheme A1 uses the origin of the reference coordinate system and the sample point, the following schemes (A2, A3, and A4) only use the origin of the reference coordinate system without using the sample point.

In all the schemes A2, A3, and A4, the following condition is set as in the scheme A1.

(Condition 1) The position of a point on the picture plane 100 to which the origin of the reference coordinate system is projected is kept unchanged before and after a vanishing point position change.

In addition, the following conditions are set in the respective schemes. With these conditions thus added, the position of O_new on the line Pc_newPo is identified.

<Scheme A2>

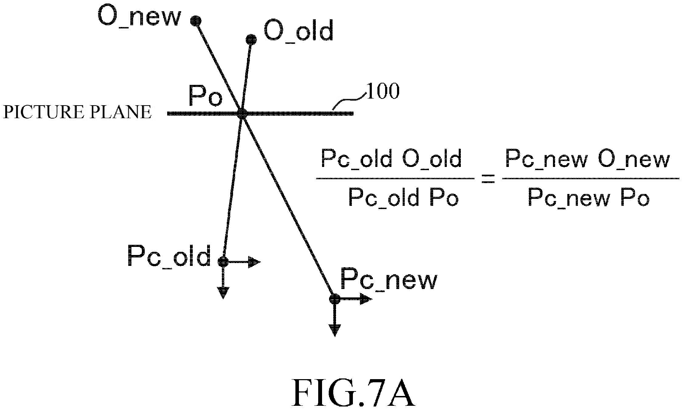

As illustrated in Fig. 7A, PcO/PcPo is kept unchanged before and after a vanishing point position change. In other words, Pc_oldO_old/Pc_oldPo = Pc_newO_new/Pc_newPo is made to hold.

<Scheme A3>

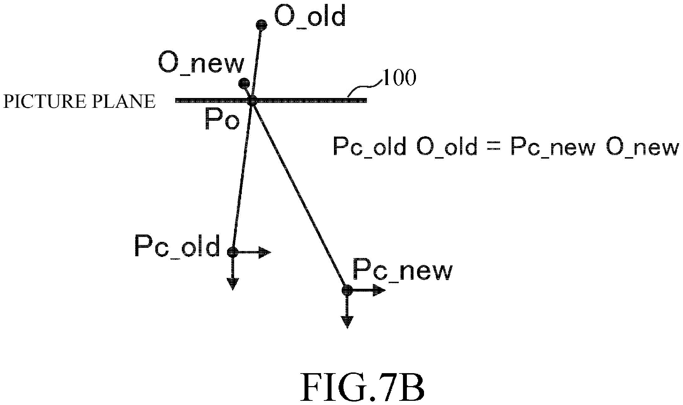

As illustrated in Fig. 7B, PcO is kept unchanged before and after a vanishing point position change. In other words, Pc_oldO_old = Pc_newO_new is made to hold.

<Scheme A4>

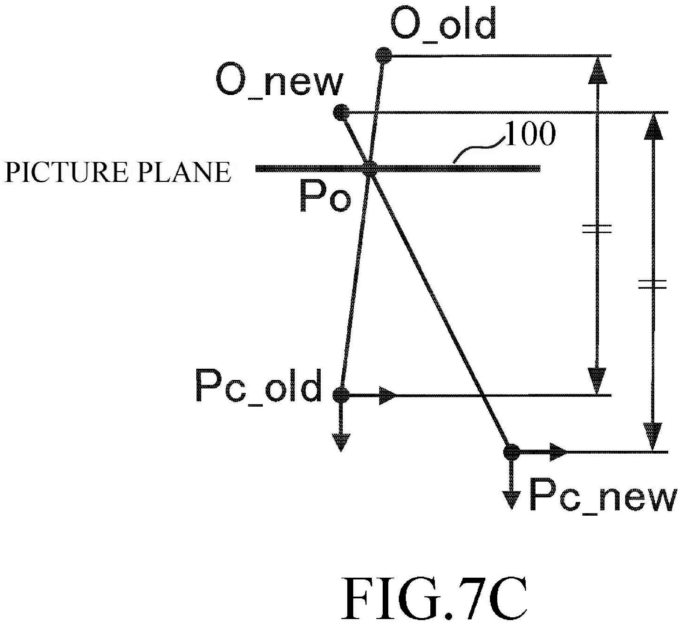

As illustrated in Fig. 7C, a component of PcO in a camera optical axis direction (in other words, the component perpendicular to the picture plane 100) is kept unchanged in size before and after a vanishing point position change.

<Scheme A5>

The area in which a predetermined three-dimensional object is projected onto the picture plane 100 is kept unchanged before and after a vanishing point position change.

With the scheme A2 used, the size of a drawing target object that exists near the origin of the reference coordinate system and is drawn on the picture plane 100 is nearly unchanged before and after a vanishing point position change.

With the schemes A3 and A4 used, for example, in a case where a triangle formed by the three vanishing points is enlarged by moving any of the vanishing points, a drawing target object existing near the origin of the reference coordinate system is also enlarged in the size drawn on the picture plane 100.

The scheme A3 has a side effect in which, in a case where the position of a drawing target object seen from the camera Pc is moved in a direction away from the front of the camera Pc due to movement of the camera Pc or the like, the size of the drawn object is enlarged. The scheme A4 does not have such side effect.

<Settings of Reference Coordinate System 300>

For example, the orientation of the reference coordinate system 300 may be set by using, but not limited to, the following systems.

    (1) World Coordinate System
    (2) Object Coordinate System

For example, the position of the origin of the reference coordinate system 300 may be set by using, but not limited to, the following origins.

    (1) Origin of World Coordinate System
    (2) Origin of Object Coordinate System

The world coordinate system is the most basic coordinate system that is preset in a three-dimensional space to be drawn.

The object coordinate system is a coordinate system that is preset in "a given object existing in a three-dimensional space".

A combination of the position and the orientation of the reference coordinate system 300 is not particularly limited. For example, the origin of the object may be used as the origin of the reference coordinate system 300, and the orientation of the world coordinate system may be used as the orientation of the reference coordinate system 300.

<Position of Sample Point in Reference Coordinate System 300>

The position of the sample point may be set on a coordinate axis of the reference coordinate system 300. In this case, the vanishing point Vs coincides with any one of the vanishing points V1, V2, and V3, and there is no need for calculation to determine the position of Vs.

Also, as the coordinates of the sample point in the reference coordinate system 300, the same coordinate values such as (100, 0, 0) may be always used or the coordinate values may be changed for each process. For example, the origin of an object may be used as the origin of the reference coordinate system 300, and the coordinates of the sample point may be changed depending on the distance between the camera Pc and the object. The distance between the sample point and the origin may be set to be small if the distance between the camera Pc and the object is small or may be set to be large if the distance between the camera Pc and the object is large.

However, if the coordinates of the sample point in the reference coordinate system 300 are set to fixed values, such as (100, 0, 0), a significant change in the position of the vanishing point corresponding to the direction (100, 0, 0) on the picture plane 100 may result in undesirable behavior. For example, in a case where the aforementioned scheme B1 or B2 is used, there is a characteristic in which, if the position of the vanishing point Vs changes significantly and the length of PoVs_new becomes too short, the position of the point Ps_new cannot be taken on the half-line Vs_newPo.

As a solution to overcome the above characteristic, the following schemes may be used.

<Scheme C1>

The coordinates of a sample point in the reference coordinate system 300 are selected from three points (100, 0, 0), (0, 100, 0), and (0, 0, 100). The directions of these three points correspond to the vanishing points V1, V2, and V3 on the picture plane 100, respectively. The sample point corresponding to the vanishing point with the least change in position on the picture plane 100 is used.

<Scheme C2>

The coordinates of a sample point S in the reference coordinate system 300 are obtained from the following conditions.

(Condition C2-1) The distance from the origin of the reference coordinate system is a predetermined distance d (for example, d = 100).

(Condition C2-2) The direction from Po to Ps on the picture plane 100 remains unchanged before and after a vanishing point position change.

The coordinates of the sample point satisfying these conditions can be obtained in the following manner.

A matrix in which the orientation of the reference coordinate system 300 in a state before a vanishing point position change is expressed in the camera coordinate system is denoted as M_old. The elements in the matrix are arranged such that each row in M_old is a vector that represents a unit vector of a corresponding coordinate axis of the reference coordinate system 300 expressed in the camera coordinate system. Similarly, a matrix in which the orientation of the reference coordinate system 300 in a state after the vanishing point position change is expressed in the camera coordinate system is denoted as M_new. A matrix M_rot that expresses a rotation from M_old to M_new is obtained in accordance with the following formula.

$$\texttt{M\_rot = M\_old}^{-1}\texttt{M\_new}$$

M_rot can be regarded as a rotation about a certain rotation axis. A vector of this rotation axis is denoted as v_axis. There are several methods to calculate v_axis from M_rot. For example, M_rot may be converted to a quaternion and then the imaginary part of the quaternion may be normalized. Since v_axis thus obtained is a vector expressed in the camera coordinate system, v_axis is converted into a row vector and the row vector is multiplied by $\texttt{M\_old}^{-1}$ (or $\texttt{M\_new}^{-1}$) on the right side, thereby being converted into a vector v_ref expressed in the reference coordinate system 300.

$$\texttt{v\_ref = v\_axisM\_old}^{-1}$$

or

$$\texttt{v\_ref = v\_axisM\_new}^{-1}$$

The obtained v_ref is multiplied by d to obtain the coordinates of the sample point S in the reference coordinate system 300.

<Scheme of Changing Position of Projected Point Po on Picture plane 100>

In the foregoing schemes, the position and/or orientation of the camera Pc is obtained under the setting of the condition "the position of a point Pc to which the origin of the reference coordinate system is projected onto the picture plane 100 is kept unchanged before and after a vanishing point position change".

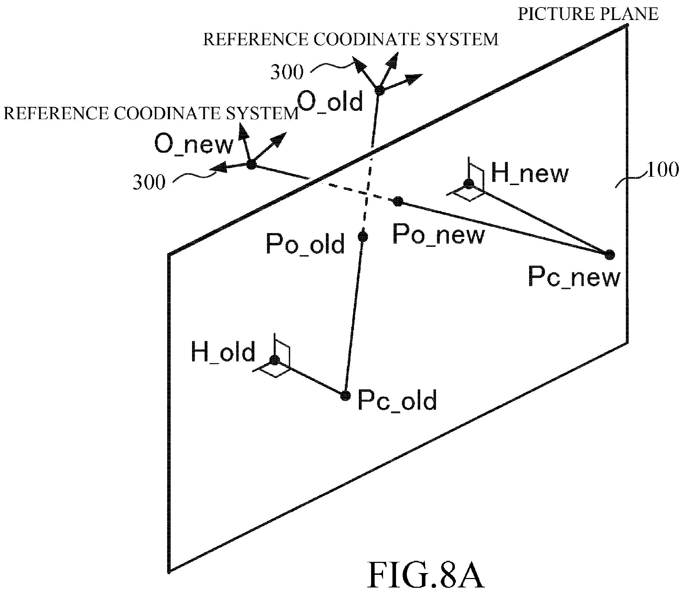

As an alternative idea illustrated in Fig. 8A, a scheme using a condition different from the above will be described. In this scheme, the position of the point Po on the picture plane 100 is also changed with a vanishing point position change. The position of the point Po after the vanishing point position change is obtained based on the positions of the vanishing points after the vanishing point position change.

The three vanishing points on the picture plane 100 are denoted as V1, V2, and V3, respectively. A vector from V1 to V2 is denoted as Va. A vector from V1 to V3 is denoted as Vb. Since the triangle V1V2V3 is an acute triangle as described above, Va and Vb are not parallel to each other. The position of a certain point P on the picture plane 100 can be expressed as a linear combination of the vectors Va and Vb as in the following formula.

$$\texttt{P = V1 + KaVa + KbVb}$$

If Ka and Kb are given, the position of the point P is uniquely determined. Reversely, if the position of the point P is given, the values Ka and Kb are uniquely determined. The values in the latter case are derived as follows.

A unit vector perpendicular to Va among vectors on the picture plane 100 is denoted as Na. A unit vector perpendicular to Vb among the vectors on the picture plane 100 is denoted as Nb. Using Va·Na = 0 and Vb·Nb = 0, Ka and Kb can be obtained in the following manner. Here, "·" represents an inner product.

$$Ka = ((P-V1) \cdot Nb) / (Va \cdot Nb)$$

$$Kb = ((P-V1) \cdot Na) / (Vb \cdot Na)$$

Using these, the position of the point Po after the vanishing point position change is determined in accordance with the following scheme.

Po, V1, Va, and Vb before the vanishing point position change are denoted as Po_old, V1_old, Va_old, and Vb_old, respectively.

Po, V1, Va, and Vb after the vanishing point position change are denoted as Po_new, V1_new, Va_new, and Vb_new, respectively.

Ka and Kb are obtained which satisfy Po_old = V1_old + KaVa_old + KbVb_old. Po_new is obtained by using the following formula.

$$Po\_new = V1\_new + KaVa\_new + KbVb\_new$$

The origin O_new of the reference coordinate system after the vanishing point position change exists on a line connecting the camera Pc_new and the point Po_new, but where on that line the origin O_new exists is unknown.

Most of the processes for determining the origin O_new of the reference coordinate system, which will be explained hereinafter, are the same as the aforementioned processes in the case where the condition "the position of the point Po is kept unchanged before and after a vanishing point position change" is set. Therefore, it should be noted that only different processes will be described.

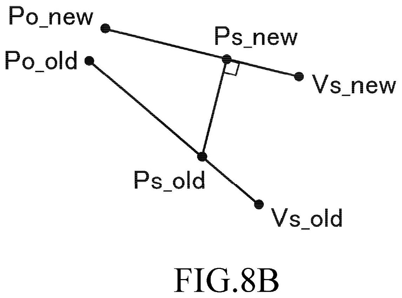

In the scheme B1, as illustrated in Fig. 8B, a foot of a perpendicular to the half-line Vs_newPo_new dropped from the point Ps_old is determined as Ps_new.

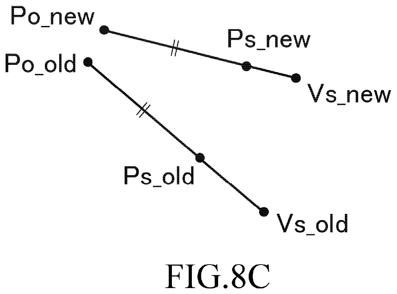

In the scheme B2, as illustrated in Fig. 8C, the position of Ps_new is determined such that Po_oldPs_old = Po_newPs_new holds.

In the scheme B3, the position of Ps_new is determined such that Po_oldPs_old/Po_oldVs_old = Po_newPs_new/Po_newVs_new holds.

Po in Fig. 3 corresponds to Po_new.

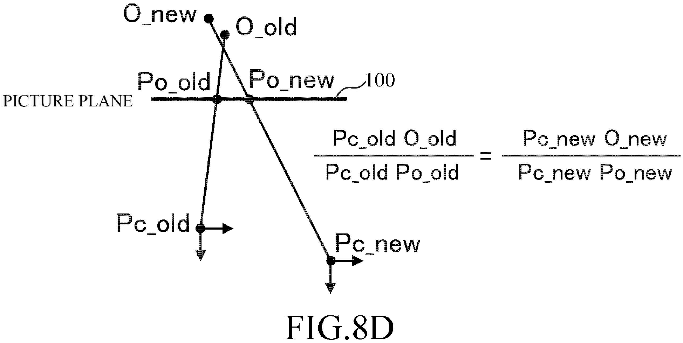

In the scheme A2, PcO/PcPo is kept unchanged before and after a vanishing point position change as illuminated in Fig. 8D. In other words, Pc_oldO_old/Pc_oldPo_old = Pc_newO_new/Pc_newPo_new is made to hold.

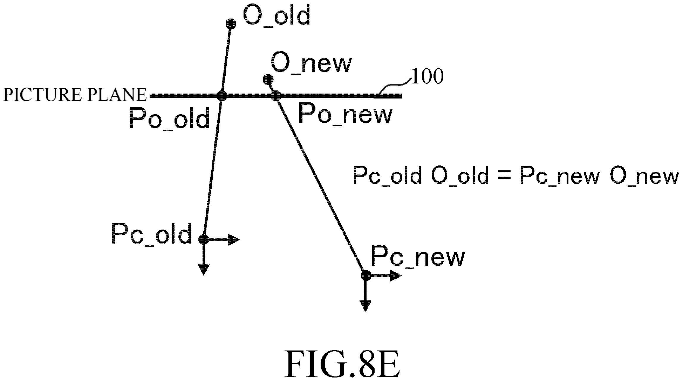

In the scheme A3, PcO is kept unchanged before and after a vanishing point position change as illuminated in Fig. 8E. In other words, Pc_oldO_old = Pc_newO_new is made to hold.

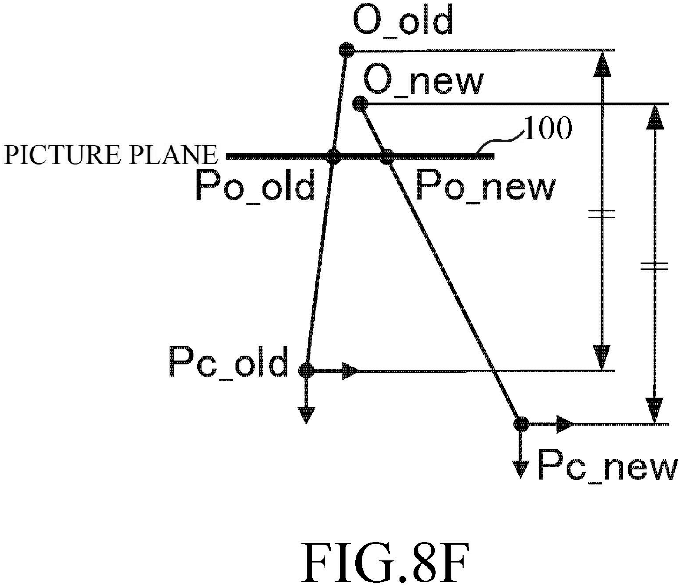

In the scheme A4, the component of PcO in the camera optical axis direction (in other words, the component perpendicular to the picture plane 100) is kept unchanged in size before and after a vanishing point position change as illustrated in Fig. 8F.

<Arrangement of Vanishing Points in Three-point Perspective>

As described above, it is known that a triangle V1V2V3 having vanishing points V1, V2, and V3 in three-point perspective as vertices is always an acute triangle. In other words, it is theoretically impossible for the triangle V1V2V3 to be an obtuse triangle. Therefore, the following solutions may be considered.

(Modification 1)

In a case where a triangle V1V2V3 becomes an obtuse triangle in a user interface that allows the triangle V1V2V3 to be an obtuse triangle, the position and/or orientation of camera Pc is not updated to prevent the calculation for determining the position and/or orientation of the camera from failing. After that, when the triangle V1V2V3 returns to an acute triangle by an operator's instruction, the update of the position and/or orientation of the camera Pc is resumed.

(Modification 2)

Another modification is to provide a user interface that limits a range of movement of the three vanishing points in order to prevent the triangle V1V2V3 from becoming an obtuse triangle. However, since such a user interface setting limits the range of movement of the vanishing points and may cause the user to feel inconvenient, it is preferable to adopt the above modification 1.

<Embodiment 2 (Two-point Perspective)>

Description will be given about how to deal with a case where a state after a vanishing point position change is two-point perspective.

As described above, in the two-point perspective state, the relative positional relationship between the picture plane 100 and the camera PC cannot be determined from the positions of the vanishing points alone. Therefore, this problem is solved by using the state of the camera Pc before the vanishing point position change. Here, the state before the vanishing point position change may be two-point perspective or three-point perspective.

A point H denotes a foot of a perpendicular to the picture plane 100 dropped from the camera Pc. The point H is a point on a line segment V1V2. The points H before and after the vanishing point position change are denoted as a point H_old and a point H_new, respectively. The vanishing points on the picture plane 100 after the vanishing point position change are denoted as V1_new and V2_new. The point H_new exists on a line segment V1_newV2_new. Thus, the point H_new is obtained by using the following schemes.

<Scheme D1>

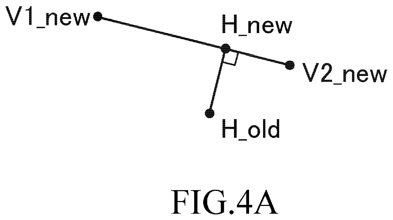

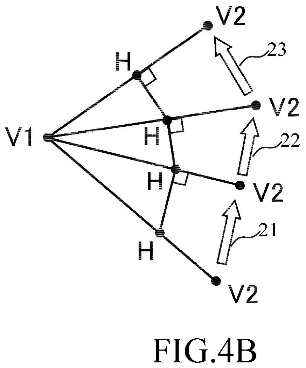

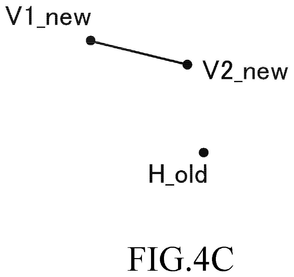

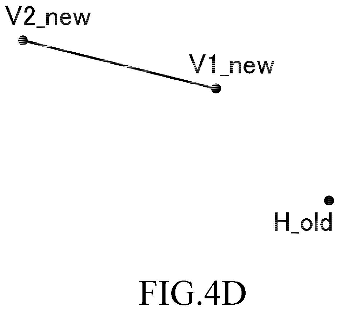

As illustrated in Fig. 4A, a foot of a perpendicular dropped from the point H_old to the line segment V1_new-V2_new on the picture plane 100 is determined as the point H_new. However, this scheme has the following problems.
(a) The point H approaches the vanishing point. For example, as illustrated in Fig. 4B, when the position of V2 changes successively through a process 21, a process 22, and a process 23 while the position of V1 remains unchanged, the point H approaches V1. This brings the camera Pc close to the picture plane 100, increasing the angle of view of the camera Pc, which is undesirable because it distorts an image drawn.
(b) In cases as illustrated in Figs. 4C and 4D, it is impossible to drop a perpendicular from the point H_old to the line segment V1_newV2_new.

<Scheme D2>

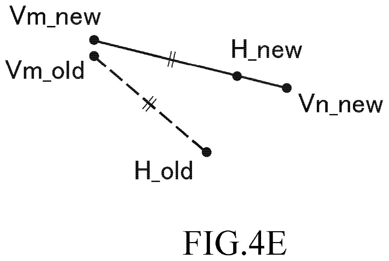

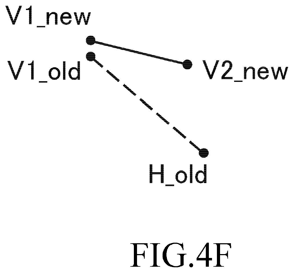

As illustrated in Fig. 4E, the distance between the vanishing point and the point H is maintained.
Of V1 and V2, the one which is less changed in position on the picture plane 100 is denoted as Vm, and the other is denoted as Vn. The points Vm before and after the vanishing point position change is denoted as Vm_old and Vm_new, respectively. The point Vn after the vanishing point position change is denoted as Vn_new.
H_new is obtained such that Vm_oldH_old = Vm_newH_new holds. However, this scheme has the following problem.
(c) If the length V1_newV2_new is too short as illustrated in Fig. 4F, the point H_new cannot be taken on the line segment V1_newV2_new.

<Scheme D3>

The ratio between the distances from the vanishing points to the point H is maintained as follows.
The positions of V1 and V2 before the position change are denoted as V1_old and V2_old, respectively, and the positions of V1 and V2 after the position change are denoted as V1_new and V2_new, respectively.
H_new is obtained such that V1_oldH_old:H_oldV2_old = V1_newH_new:H_newV2_new holds.
As described above, Pc exists on the circumference of the semicircle that exists on the plane containing the line segment V1V2 and being perpendicular to the picture plane 100 and that has V1V2 as its diameter. Therefore, once H_new is determined, the relative positional relationship between the picture plane 100 and the camera Pc can be obtained.
After that, using the same scheme as in the case of three-point perspective, the position and orientation of the camera coordinate system relative to the reference coordinate system 300 are determined.

<Axial Reversal>

The following points can be noted regarding the characteristics of a case where a vanishing point exists at infinity.
In a case where a coordinate axis of the reference coordinate system 300 is parallel to the picture plane 100, the vanishing points of this coordinate axis exist at infinity in two directions corresponding to both of the positive and negative directions of this coordinate axis. Therefore, if a vanishing point of a certain coordinate axis is moved to infinity, the vanishing point of that coordinate axis may appear on the opposite side depending on specifications of a user interface for an operation of moving a vanishing point.

In this case, from the viewpoint of geometric continuity, the disappeared vanishing point and the appeared vanishing point correspond to the opposite sides of the coordinate axis. For example, if the vanishing point corresponding to the positive X-axis direction of the reference coordinate system 300 is moved to infinity and made to disappear, the vanishing point corresponding to the negative X-axis direction will appear on the opposite side.

However, this behavior is not necessarily desirable for the user, so it is required to make a vanishing point appear on the same side as the disappeared vanishing point. To this end, the following scheme is used.

<Scheme E1>

At the start of the operation of moving a vanishing point (such as dragging of a mouse), a positive or negative direction is recorded as the axial direction of each vanishing point. Then, while the operation is continuing (for example, during the dragging of the mouse), the recorded positive or negative direction is used when a vanishing point, which is gone to infinity and disappeared once, appears again.

<Scheme Substituting Another Point for Origin O>

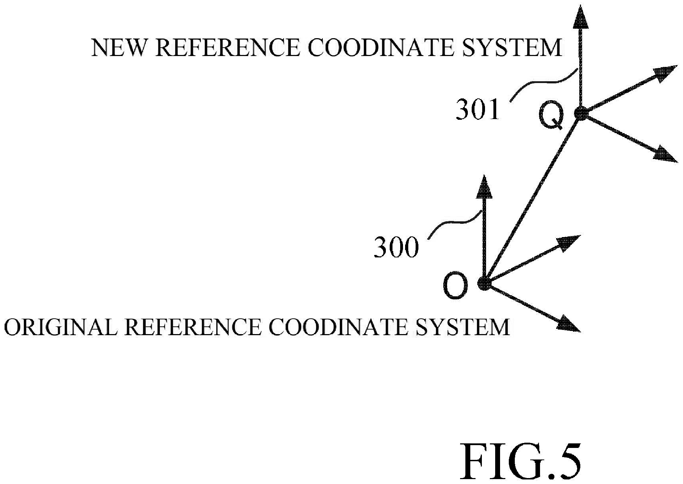

Instead of the origin O of the reference coordinate system 300, a point Q whose position coordinates in the reference coordinate system 300 are known may be used. In this case, a new reference coordinate system 301 that satisfies the following two conditions may be defined and used (Fig. 5).

(Condition q1) The point Q is set as the origin.

(Condition q2) The directions of the coordinate axes are the same as the directions of the coordinate axes in the original reference coordinate system 300.

As described above, a group of lines parallel to each other has the same vanishing point. Therefore, the positions of the vanishing points of the coordinate axes in the new reference coordinate system 301 are the same as the positions of the vanishing points of the coordinate axes in the original reference coordinate system 300. Therefore, using the point Q and the new reference coordinate system 301, the schemes using the origin of the reference coordinate system 300 described above can be applied as they are.

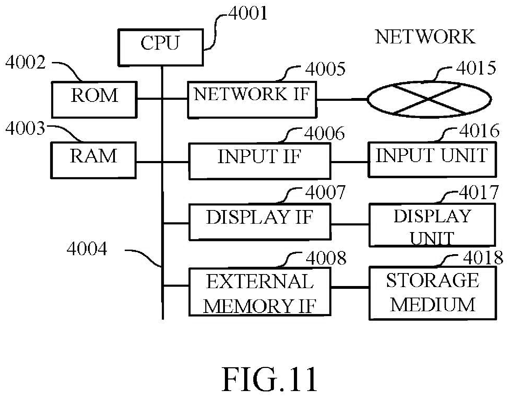

Fig. 11 is a hardware configuration diagram in an embodiment.

The hardware configuration in the embodiment includes a CPU 4001, a ROM 4002 and a RAM 4003 that may store a program and data in the present embodiment, a network interface 4005, an input interface 4006, a display interface 4007, and an external memory interface 4008. These pieces of hardware are connected to each other via a bus 4004.

The network interface 4005 is connected to a network 4015. The network 4015 is a wired LAN, a wireless LAN, the Internet, a telephone network, or the like. An input unit 4016 is connected to the input interface 4006. A display unit 4017 is connected to the display interface 4007. The display unit 4017 may be implemented by multiple display devices. A storage medium 4018 is connected to the external memory interface 4008. The storage medium 4018 may be a RAM, a ROM, a CD-ROM, a DVD-ROM, a hard disk, a memory card, a USB memory, or the like.

The procedures in the method and the program in the illustrated embodiments may be reordered unless a contradiction occurs. Also, unless a contradiction occurs, an illustrated single procedure may be executed multiple times at different time points. Moreover, multiple procedures may be executed concurrently unless a contradiction occurs. Furthermore, not all procedures are essential, and some procedure(s) may be excluded or may not be executed unless a contradiction occurs.

The aforementioned points also apply to constituent elements of the method set forth in claims. Specifically, the constituent elements may be reordered unless a contradiction occurs. In addition, multiple constituent elements may be executed concurrently unless a contradiction occurs. Then, to execute these constituent elements falls within the technical scope specified in claims.

Each of the procedures may be executed by an operating system or hardware. The program may be stored in a non-transitory medium and distributed in that state.

The program and the method achieving the foregoing embodiments may be executed by a computer having a hardware configuration illustrated in Fig. 11. In other words, the program in the embodiments may be implemented as a method to be executed by the computer.

The program may be stored in the storage medium 4018, the ROM 4002, or the RAM 4003.

Each embodiment may be implemented as a hardware apparatus in which the program is installed.

[Reference Signs List]

4004 bus
4005 network interface
4006 input interface
4007 display interface
4008 external memory interface
4015 network
4016 input unit
4017 display unit
4018 storage medium

**Claims**

1. A method causing a computer to generate an image of a three-dimensional object existing in a virtual three-dimensional space by projecting the three-dimensional object onto a picture plane by perspective projection using a virtual camera arranged in the three-dimensional space, the method comprising:

   updating a position and/or orientation of the virtual camera in response to a change in a position of at least one of a plurality of vanishing points existing on the picture plane and corresponding to infinity of coordinate axes in a known Cartesian coordinate system existing in the three-dimensional space; and
   generating the image of the three-dimensional object based on the virtual camera, the position and/or orientation of which is updated, wherein
   the updating includes changing the position and/or orientation of the virtual camera by applying a process having a characteristic in which, in a case where the changed position of the vanishing point is returned to the position of the vanishing point before the change in the position of the at least one of the plurality of vanishing points, the updated position and/or orientation of the virtual camera is returned to the position and/or orientation of the virtual camera before the change in the position of the at least one of the plurality of vanishing points.

2. The method according to claim 1, comprising updating the position and/or orientation of the virtual camera based on a position of a point to which at least one of predetermined points existing in the Cartesian coordinate system is projected onto the picture plane by the virtual camera.

3. The method according to claim 2, further comprising keeping a position of a point to which one of the predetermined points is projected onto the picture plane by the virtual camera unchanged before and after the change in the position of the at least one of the plurality of vanishing points.

4. The method according to claim 2, further comprising determining a position of a point to which one of the predetermined points is projected onto the picture plane by the virtual camera after the change in the position of the at least one of the plurality of vanishing points based on the positions of the plurality of vanishing points after the change in the position of the at least one of the plurality of vanishing points.

5. The method according to claim 2, wherein

   two of the predetermined points exist in the Cartesian coordinate system, and
   the updating further includes making a ratio between a length from a point Po_old to which one of the two predetermined points is projected onto the picture plane to a point Ps_old to which the other predetermined point is projected onto the picture plane and a length from the point Po_old to a vanishing point Vs_old on the picture plane corresponding to infinity of a line connecting the two predetermined points before the change in the position of the at least one of the plurality of vanishing points equal to a ratio between a length from a point Po_new to which the one of the two predetermined points is projected onto the picture plane to a point Ps_new to which the other predetermined point is projected onto the picture plane and a length from the point Po_new to a vanishing point Vs_new on the picture plane corresponding to infinity of a line connecting the two predetermined points after the change in the position of the at least one of the plurality of vanishing points.

6. The method according to claim 2, wherein

   two of the predetermined points exist in the Cartesian coordinate system, and
   the updating includes making a length from a point Po_old to which one of the two predetermined points is projected onto the picture plane to a point Ps_old to which the other predetermined point is projected onto the picture plane before the change in the position of the at least one of the plurality of vanishing points equal to a length from a point Po_new to which the one of the two predetermined points is projected onto the picture plane to a point Ps_new to which the other predetermined point is projected onto the picture plane after the change in the position of the at least one of the plurality of vanishing points.

7. The method according to claim 2, wherein

a single point O of the predetermined points exists in the Cartesian coordinate system, and
the updating further includes determining a position Pc_new of the virtual camera after the change in the position of the at least one of the plurality of vanishing points such that a length from a position Pc_old of the virtual camera to the point O before the change in the position of the at least one of the plurality of vanishing points equals to a length from the position Pc_new to the point O.

8. The method according to claim 2, wherein

a single point O of the predetermined points exists in the Cartesian coordinate system, and
the updating further includes determining a position Pc_new of the virtual camera after the change in the position of the at least one of the plurality of vanishing points such that a component, in an optical axis direction of the virtual camera, of a length from a position Pc_new of the virtual camera to the point O before the change in the position of the at least one of the plurality of vanishing points equals to a component, in the optical axis direction of the virtual camera, of a length from the position Pc_new to the point O.

9. The method according to claim 2, wherein

a single point O of the predetermined points exists in the Cartesian coordinate system, and
the updating further includes determining a position Pc_new of the virtual camera after the change in the position of the at least one of the plurality of vanishing points such that a ratio between a length from a position Pc_old of the virtual camera to the point O and a length from the position Pc_old to a point Po_old to which the point O is projected onto the picture plane by the virtual camera before the change in the position of the at least one of the plurality of vanishing points equals to a ratio between a length from the position Pc_new to the point O and a length from the position Pc_new to a point Po_new to which the point O is projected onto the picture plane by the virtual camera after the change in the position of the at least one of the plurality of vanishing points.

10. The method according to claim 2, wherein

two of the predetermined points exist in the Cartesian coordinate system, and
one of the two predetermined points is an origin of the Cartesian coordinate system, and
the other of the two predetermined points is a point that exists on any one of three orthogonal axes in the Cartesian coordinate system.

11. The method according to claim 2, wherein

two of the predetermined points exist in the Cartesian coordinate system, and
the two predetermined points are two points such that a direction from one to the other of the two predetermined points in a coordinate system of the virtual camera is unchanged before and after the change in the position of the at least one of the plurality of vanishing points.

12. The method according to claim 1, wherein

in a case where the number of vanishing points on the picture plane after the change in the position of the at least one of the plurality of vanishing points is two,
the updating further includes locating the virtual camera after the change in the position of the at least one of the plurality of vanishing points on a perpendicular to the picture plane erected on a foot of a perpendicular dropped from a foot of a perpendicular to the picture plane dropped from the virtual camera before the change in the position of the at least one of the plurality of vanishing points on the picture plane to a line segment connecting the two vanishing points after the change in the position of the at least one of the plurality of vanishing points.

13. The method according to claim 1, wherein

in a case where the number of vanishing points on the picture plane after the change in the position of the at least one of the plurality of vanishing points is two, the updating further includes locating the virtual camera after the change in the position of the at least one of the plurality of vanishing points on a perpendicular to the picture plane erected on a point H_new which is located on a line segment Vm_newVn_new and determined such that Vm_newH_new = Vm_oldH_old holds, where one of the two vanishing points which is less changed in position on the picture plane is denoted as Vm and the other vanishing point is denoted as Vn, the points Vm before and after the change in the position of the at least one of the plurality of vanishing points are denoted as Vm_old and Vm_new, respectively, the point Vn after the change in the position of the at least one of the plurality of vanishing points is denoted as Vn_new, and a foot of a perpendicular to the picture plane dropped from the virtual camera before the change in the position of the at least one of the plurality of vanishing points is denoted as H_old.

14. The method according to claim 1, wherein

in a case where the number of vanishing points on the picture plane after the change in the position of the at least one of the plurality of vanishing points is two, the updating further includes locating the virtual camera after the change in the position of the at least one of the plurality of vanishing points on a perpendicular to the picture plane erected on a point H_new which is located on a line segment V1_newV2_new and determined such that V1_oldH_old:H_oldV2_old = V1_new-H_new:H_newV2_new holds, where the two vanishing points are denoted as V1 and V2, positions of the two vanishing points V1 and V2 before the change in the position of the at least one of the plurality of vanishing points are denoted as V1_old and V2_old, respectively, positions of the two vanishing points V1 and V2 after the change in the position of the at least one of the plurality of vanishing points are denoted as V1_new and V2_new, respectively, and a foot of a perpendicular to the picture plane dropped from the virtual camera before the change in the position of the at least one of the plurality of vanishing points is denoted as H_old.

15. The method according to claim 1, wherein
the updating includes, in a case where one of the plurality of vanishing points is moved to infinity and disappears once and then the disappeared vanishing point appears again, making the corresponding vanishing point appear again on the same side as a disappearance side of a coordinate axis in the Cartesian coordinate system corresponding to the disappeared vanishing point.

16. The method according to claim 1, wherein
the updating includes stopping the position and/or orientation of the virtual camera from being updated in a case where a triangle formed by three vanishing points in three-point perspective becomes an obtuse triangle.

17. A program causing a computer to execute the method according to any one of the claims 1 to 16.

REFERENCE COODINATE SYSTEM

300  O

PICTURE PLANE  Po  Ps  Vs  100

S

CAMERA Pc

FIG.1A

REFERENCE COODINATE SYSTEM

FIG.1B

REFERENCE COORDINATE SYSTEM

300

O

S

Po  Ps

PICTURE PLANE    100

Vs

CAMERA Pc

FIG.1C

FIG.2A

FIG.2B

FIG.2C

FIG.2D

FIG.2E

FIG.3

FIG.4A

FIG.4B

V1_new

V2_new

H_old

FIG.4C

V2_new

V1_new

H_old

FIG.4D

FIG.4E

V1_new

V1_old

V2_new

H_old

FIG.4F

NEW REFERENCE COODINATE SYSTEM

301 Q

300

O

ORIGINAL REFERENCE COODINATE SYSTEM

FIG.5

PICTURE PLANE

FIG.6A

PICTURE PLANE

100

V2

M

Pc

V1

FIG.6B

PICTURE PLANE

REFERENCE COODINATE SYSTEM

300

O_old

REFERENCE COODINATE SYSTEM

O_new

300

100

H_new

Po

Pc_new

H_old

Pc_old

FIG.6C

O_new

O_old

PICTURE PLANE    Po    100

$$\frac{Pc\_old\ O\_old}{Pc\_old\ Po} = \frac{Pc\_new\ O\_new}{Pc\_new\ Po}$$

Pc_old

Pc_new

# FIG.7A

FIG.7B

O_old

O_new

PICTURE PLANE

~100

Po

Pc_old

Pc_new

FIG.7C

FIG.8A

FIG.8B

Po_new

Po_old

Ps_new

Vs_new

Ps_old

Vs_old

FIG.8C

PICTURE PLANE

$$\frac{Pc\_old\ O\_old}{Pc\_old\ Po\_old} = \frac{Pc\_new\ O\_new}{Pc\_new\ Po\_new}$$

FIG.8D

O_old

O_new

PICTURE PLANE ——— 100

Po_old

Po_new

$Pc\_old\ O\_old = Pc\_new\ O\_new$

Pc_old

Pc_new

FIG.8E

O_old

O_new

100

PICTURE PLANE

Po_old          Po_new

Pc_old

Pc_new

FIG.8F

FIG.9

FIG.10A

FIG.10B

FIG.11

## INTERNATIONAL SEARCH REPORT

| International application No. |
|---|
| **PCT/JP2024/014894** |

**A.    CLASSIFICATION OF SUBJECT MATTER**

*G06T 19/00*(2011.01)i
FI:   G06T19/00 A

According to International Patent Classification (IPC) or to both national classification and IPC

**B.    FIELDS SEARCHED**

Minimum documentation searched (classification system followed by classification symbols)

G06T19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2018-180803 A (FUJITSU LIMITED) 15 November 2018 (2018-11-15)<br>paragraphs [0088]-[0089], [0128] | 1-17 |
| A | JP 9-147149 A (HITACHI, LTD.) 06 June 1997 (1997-06-06)<br>paragraphs [0028]-[0029] | 1-17 |
| A | JP 7305241 B1 (CELSYS INC.) 10 July 2023 (2023-07-10)<br>paragraphs [0080]-[0082], fig. 13 | 1-17 |

| ☐ Further documents are listed in the continuation of Box C. | ☑ See patent family annex. |
|---|---|

\*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **11 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (July 2022)

**INTERNATIONAL SEARCH REPORT**
Information on patent family members

International application No.

**PCT/JP2024/014894**

| Patent document cited in search report | | | Publication date (day/month/year) | Patent family member(s) | Publication date (day/month/year) |
|---|---|---|---|---|---|
| JP | 2018-180803 | A | 15 November 2018 | (Family: none) | |
| JP | 9-147149 | A | 06 June 1997 | US 5870099 A<br>p. 5, lines 28-65 | |
| JP | 7305241 | B1 | 10 July 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 7305241 B

**Non-patent literature cited in the description**

• *Interaction of Perspective Ruler with 3D Layer-Use of Perspective Ruler*, 24 July 2023, https://tips.clip-studio.com/ja-jp/articles/1116#1dff0c63